# EUROPEAN PATENT APPLICATION

(11) **EP 1 698 227 A2**
(43) Date of publication of application: **06.09.2006**
(21) Application number: 06076230.9
(22) Date of filing: 02.10.2002
(51) Int. Cl.: A01K 5/02

(54) **A device for and a method of automatically supplying feed to animals**

(30) Priority: 03.10.2001 NL 1019094
(62) Divisional of application: 02079047.3
(71) Applicant: Lely Enterprises AG, 6300 ZUG (CH)
(72) Inventor: van den Berg, Karel, 2971 BR Bleskensgraaf (NL); Voogd, Lucien Eliza Niels, 4143 HG Leerdam (NL)
(74) Representative: Corten, Maurice Jean F.M.

(57) **Abstract**

A device for automatically supplying feed to animals, such as cows, the device being provided with a control device (19), the control device (19) generating a control signal for controlling the supply of the feed, and with parameter-measuring means for measuring a momentary value of a variable parameter and for issuing a parameter value signal to the control device (19), the control device (19) being provided with a processing device for processing the parameter value signal into the control signal. The parameter measuring means comprise means for determining the eating rate per animal and for issuing an eating rate signal to the processing device.

## Description

The invention relates to a device for automatically supplying feed to animals according to the preamble of claim 1.

Such a device, also called feed mixing device, is known from EP-A-0974264. In this known device, feed is supplied to the animal in dependence on the temperature of the feed, in dependence on the temperature of the environment of the animal, and in dependence on, in the broadest sense of the word, the physiological data of the animal itself, in particular the temperature of the skin or the internal temperature, the humidity of the skin, and the composition of excrements.

It is an object of the invention to provide an alternative device for automatically supplying feed to animals.

According to the invention, for that purpose a device for automatically supplying feed to animals, such as cows, is provided with a control device, said control device generating a control signal for controlling the supply of the feed, and with parameter-measuring means for measuring a momentary value of a variable parameter and for issuing a parameter value signal to the control device, the control device being provided with a processing device for processing the parameter value signal into the control signal, characterized in that the parameter measuring means comprise means for determining the eating rate per animal and for issuing an eating rate signal to the processing device. Long research has revealed that the eating rate of the animal is an indication of the amount and ratio of sorts of feed which the animal finds the tastiest. Such data can be used for adding certain additives, such as medicines, to the sorts of feed which are fastest consumed by the animal.

The invention further relates to a device for automatically supplying feed to dairy animals, such as cows, the device being provided with a control device, said control device generating a control signal for controlling the supply of the feed, and with parameter-measuring means for measuring a momentary value of a variable parameter and for issuing a parameter value signal to the control device, the control device being provided with a processing device for processing the parameter value signal into the control signal, characterized in that the parameter measuring means comprise means for measuring the milk yield of the animal and for issuing a milk yield signal to the processing device. Although the relation between the energy contents of the feed and the milk yield is known per se, the invention is based on the insight that an automatic feed back by measuring the milk yield can quickly lead to an adaptation of the optimal feeding.

The invention further relates to a device for automatically supplying feed to dairy animals, such as cows, the device being provided with a control device, said control device generating a control signal for controlling the supply of the feed, and with parameter-measuring means for measuring a momentary value of a variable parameter and for issuing a parameter value signal to the control device, the control device being provided with a processing device for processing the parameter value signal into the control device, characterized in that the parameter measuring means comprise means for measuring the amount of an ingredient in the milk produced by a dairy animal, such as protein and/or fat and/or minerals and/or amino acids, and for issuing a relevant signal to the processing device. This makes it possible automatically and continuously to ensure that in the feed to be offered in total to a dairy animal the required ingredients for that dairy animal are present, in order to provide the correct amounts of ingredients, such as fats, proteins, sugars, and the like, in the milk obtained from that dairy animal.

In a preferred embodiment of a device according to the invention, the device is provided with means for measuring the amount of a sort of feed consumed by an animal and for issuing a consumed-feed signal to the processing device. Thus it is possible to determine in a simple manner whether and, in the affirmative, how much of the feed offered to the animal has actually been consumed by the animal.

The invention further relates to a device for automatically supplying feed to animals, such as cows, the device being provided with a control device, said control device generating a control signal for controlling the supply of the feed, and with parameter-measuring means for measuring a momentary value of a variable parameter and for issuing a parameter value signal to the control device, the control device being provided with a processing device for processing the parameter value signal into the control device, characterized in that the device is provided with means for measuring the amount of a sort of feed consumed by an animal and for issuing a consumed-amount signal to the processing device. Thus it is possible to determine in a simple manner whether and, in the affirmative, how much of the feed offered to the animal has actually been consumed by the animal.

For the purpose of inputting the relevant data, the control device is provided with a computer having a memory, said computer being provided with an inputting device for inputting data into the memory.

Because some of the above-mentioned data are not known to a farmer, it is advantageous when the control device is provided with a computer which is suitable for generating itself data for the memory. It is possible for example that the control device changes the amount and ratio of feed to be offered at a particular condition score, and always determines the intake of the animal at each chosen amount and ratio. Thus it is possible that the control device itself determines the optimal amount and ratio at a particular condition score.

Because an animal develops continuously, it is advantageous when the data are updated continuously, so that on determining the amount and ratio of sorts of feed to be supplied a developing animal can be taken into account.

In order to be able to add for particular animals particular additives such as medicines, it is advantageous when the device is provided with an additive device for adding additives to the feed.

When the device is provided with a detection device for determining, at a point of time after a supply of an amount of feed, the amount of feed, and for issuing a signal in dependence on the amount-determination result, the eating rate per sort of feed of an animal can for example be measured.

In a preferred embodiment of a device according to the invention, the device is provided with a number of hoppers, each for containing a stock of a particular sort of feed, with a feed trough which is accessible to an animal, and with conveying means for conveying feed from the hoppers to the feed trough. The control device is preferably suitable for controlling the device in such a way that sorts of feed are supplied to the feed trough in a particular amount and in a particular ratio collectively respectively as a mixture.

The detection device comprises in particular a weighing device for weighing the amount of feed in the feed trough, although other means, such as picture recognition equipment, may be applied as well.

In order to prevent that an animal keeps waiting at a feed trough after having been fed, in an embodiment of a device according to the invention, the feed trough is a feed trough which is designed to be closed by a closing means, the control device also being suitable for controlling the operation of the closing means.

A device according to the invention can be applied inter alia in milking robots. However, the invention is in particular advantageous when the device is a feeding column, in which case several animals can make use of the device simultaneously. For that purpose the feeding column is provided in a manner known per se with a framework located around a central axis, to which framework a number of feed troughs and hoppers are fitted.

Although the data in relation to the sort of feed respectively the hoppers corresponding therewith can be inputted into the computer, it is preferred when the device is provided with feed-determining means for determining the sort of feed in a hopper. Such feed-determining means may comprise for example an olfactometer, a colour meter or picture recognition equipment.

An advantageous embodiment of a device according to the invention is characterized in that the device is provided with a receptacle, the conveying means comprising a first conveyor for conveying an amount of feed from the hopper to the receptacle and a second conveyor for conveying the amount of feed from the receptacle to the feed trough. The receptacle is preferably provided with a weighing device for measuring feed present in the receptacle. This makes it possible to determine the amount of feed to be supplied to the feed trough.

Although the feed can be taken out of the receptacle by means of a separate taking-out device, for the sake of simplicity of the construction it is advantageous when there is not used a separate device for taking out. There may be used a tiltable receptacle, feed falling from the receptacle after the latter has been tilted. However, for improving the hygienic use of the device, it is preferred when the receptacle has a bottom which is designed to be opened. The receptacle is preferably provided with a control device for controlling the opening of the bottom. It has appeared to be particularly suitable when the second conveyor is a tube-shaped chute respectively a channel-shaped chute.

The invention also relates to a method of automatically supplying feed to animals, such as cows, said method comprising the step of measuring a momentary value of a variable parameter and of providing a parameter value signal, the supply of feed depending on the parameter value signal, characterized in that as variable parameter the eating rate of an animal is chosen.

The invention also relates to a method of automatically supplying feed to animals, such as cows, said method comprising the step of measuring a momentary value of a variable parameter and of providing a parameter value signal, the supply of feed depending on the parameter value signal, characterized in that as variable parameter the milk yield of the animal is chosen.

The invention also relates to a method of automatically supplying feed to animals, such as cows, said method comprising the step of measuring a momentary value of a variable parameter and of providing a parameter value signal, the supply of feed depending on the parameter value signal, characterized in that as variable parameter the amount of an ingredient in the milk supplied by a dairy animal, such as protein and/or fat and/or minerals and/or amino acids, is chosen.

The invention also relates to a method of automatically supplying feed to animals, such as cows, said method comprising the step of measuring a momentary value of a variable parameter and of providing a parameter value signal, the supply of feed depending on the parameter value signal, characterized in that as variable parameter the amount of a sort of feed consumed by an animal is chosen.

The invention will now be explained in further detail with reference to an embodiment shown in the drawing, in which:
Figure 1 is a schematic cross-sectional view of an embodiment, in the form of a feeding column, of a device according to the invention;
Figure 2 is a schematic side view of an embodiment of a device according to the invention, integrated in a milking box;
Figure 3 shows a first embodiment of means for measuring the amount of a sort of feed consumed by an animal in a device according to the invention;
Figure 4 shows a second embodiment of means for measuring the amount of a sort of feed consumed by an animal in a device according to the invention;
Figure 5 shows a third embodiment of means for measuring the amount of a sort of feed consumed by an animal in a device according to the invention;
Figure 6 shows a fourth embodiment of means for measuring the amount of a sort of feed consumed by an animal in a device according to the invention, and
Figure 7 shows a fifth embodiment of means for measuring the amount of a sort of feed consumed by an animal in a device according to the invention.

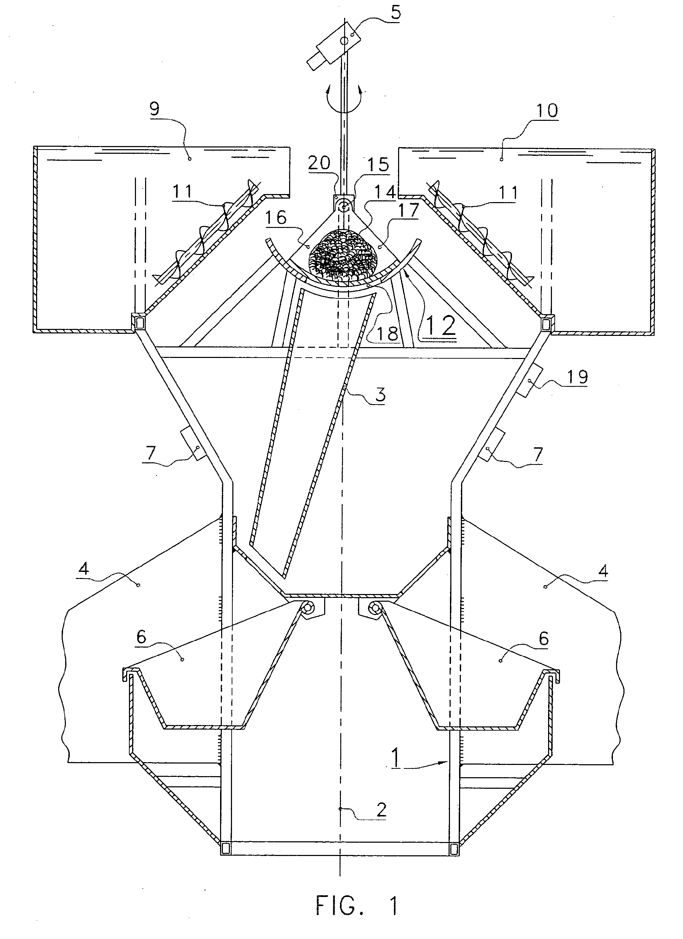

In the embodiment depicted in Figure 1 a framework 1, having a substantially circular circumference, is disposed around a central axis 2. A number of hoppers 9, 10 (two of which shown in the drawing) are located at the upper side of the framework 1. For the installation of the hoppers 9, 10 there are made not further shown provisions on the framework 1. Each hopper 9, 10 contains a particular sort of feed.

The framework 1 is provided with partitions 4 which are detachably disposed on the framework 1.

Feed troughs 6 for the animals are disposed in a circular arrangement in the lower part of the device. By means of the geometry of the device, in the embodiment shown constituted by a feeding column, it is achieved that the construction occupies little space, while the accessibility of the feeding column to the animals is optimal from all directions.

The feeding column further comprises conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally located, receiving an amount of feed conveyed by the first conveyor 11 from the hopper 9, 10 to the receptacle 12. As a first conveyor 11, an auger, gripper, conveyor belt, or any other construction known per se for conveying feed, may be used.

A second conveyor 3, preferably constituted by a tube-shaped chute respectively a channel-shaped chute, is suitable for conveying the amount of feed from the receptacle 12 to the relevant feed trough 6. For conveying the feed to the relevant feed trough 6, it is advantageous when the tube-shaped chute 3 is rotatably mounted in the feeding column. The tube-shaped chute respectively the channel-shaped chute is preferably made of stainless steel.

The device is provided with a control device 19. Said control device 19 controls the components of the device in such a way that sorts of feed are supplied in a particular ratio and in a particular amount to the feed trough 6.

The device may be provided with feed-determining means 5 for determining the sort of feed in a hopper 9, 10. Such feed-determining means may comprise for example an olfactometer, a colour meter or picture recognition equipment (such as described for example in U.S. patent 4,843,561).

For the purpose of conveying an amount of a sort of feed 14 to the tube-shaped chute 3, the receptacle 12 has a bottom which is designed to be opened. In the embodiment shown this is realised in that the bottom of the receptacle 12 has two halves 16 and 17 which are pivotable about an axis 15. When the halves 16, 17 move away from each other, there is thus created a chute aperture 18 through which the amount of sort of feed 14 falls into the tube-shaped chute 3.

The control device 19, although another control device may serve as well for that purpose, controls the opening of the bottom of the receptacle 12. Said control device 19 preferably also controls the order of functioning of the first and second conveyors 11 respectively 3, so that the supply of the sorts of feed can take place quickly.

There are provided identification means 7 for identifying an individual animal. In the embodiment shown the identification means 7 are disposed on the framework 1, but it will be obvious that the identification means can also be disposed at other places, such as for example the feed troughs 6. With the aid of the identification means 7 the identity of an animal present at a feed trough 6 is established automatically. With the aid of data stored in the memory of for example the control device 19, the amounts of sorts of feed intended for that animal can then be supplied in a particular ratio. With the aid of a weighing device 20 known per se the amount conveyed to the receptacle 12 by the first conveyor 11 can then be checked. The control device 19 further controls, with the aid of data from the animal identification means 7, the movement of the tube-shaped chute 3 so that the latter is located just over the correct feed trough 6. The control device 19 further controls the drive of the conveyors 11.

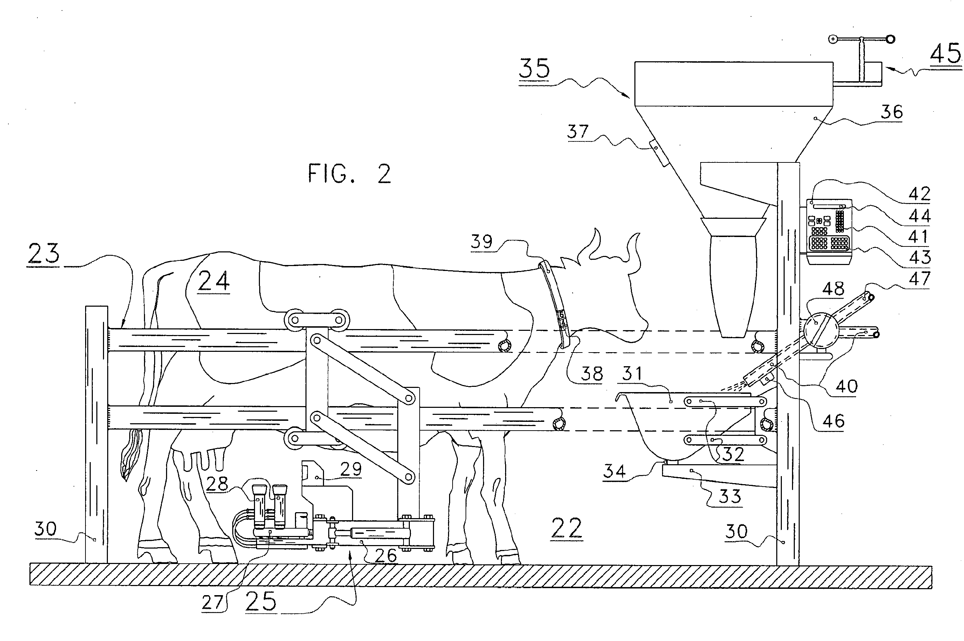

Figure 2 is a side view of a milking box 22 comprising a fencing 23 which is disposed near the circumference of a cow 24 during her stay in the milking box 22. On one side of the milking box 22 there is disposed a milking robot 25. The milking robot 25 comprises for example a robot arm 26 having at its end teat cups 28 supported by a carrier 27. On the robot arm 26 near the teat cups 28 there is further disposed a sensor 29 with the aid of which the position of the teats of a cow to be milked can be determined.

Near the front side of the milking box 22 a feed trough 31 is fastened to a post 30. In the embodiment shown the feed trough 31 is connected with a post 30 by means of a parallelogram hinge construction 32. The feed trough 31 is supported at its lower side by a supporting beam 33. Between the supporting beam 33 and the lower side of the feed trough 31 there is further disposed a measuring device 34 by means of which the weight of the feed trough 31 with contents can be determined. In the present embodiment the measuring device 34 comprises a piezo-element. It will be obvious that the invention is not limited to this specific manner in which the contents of the feed trough can be measured, and hereinafter some alternative ways of determining the weight of the feed trough with contents will be described.

Over the feed trough 31 there is fitted to the post 30 a feed metering device 35 comprising a number of hoppers (not shown in the drawing), each for containing one sort of feed, and a tube-shaped chute. The feed metering device 35 comprises a reservoir 36 surrounding the hoppers for the sorts of feed. Against the outer wall of the reservoir 36 there is disposed a receiver 37 constituting part of (non-shown) identification means. The receiver 37 can receive the signals from a transmitter 38 which is disposed for example on a collar 39 around the neck of the cow 24. It will be obvious that different sorts of identification means are applicable in the invention and that the invention is not limited to one sort of identification means. The receiver and the transmitter may further be disposed at different places. The receiver may be disposed for example on the feed trough 31 and the transmitter may be implanted in the cow.

Near the upper side of the feed trough 31 there is further fitted to the post 30 a liquid-supplying device 40, for example a sprayer, with the aid of which an amount of liquid, for example water, or a viscous liquid, such as syrup or treacle, can be added to the feed present in the feed trough 31.

The device operates as follows:
After the cow 24 has entered the milking box 22 and the transmitter 38 has come into the receiving range of the receiver 37, the cow 24 is automatically identified by the identification means. Per cow data in relation to the sorts of feed and the amount thereof offered to a relevant cow per feeding run are stored in a manner known per se in a memory 41 of a computer 42.

When a cow 24 has been identified, the identification means send a signal to the computer 42 which, with the aid of the data stored in the memory 41, controls the feed metering device 35 in such a way that an amount and ratio of sorts of feed belonging to the cow 24 are supplied.

Besides, the amount of feed consumed by a cow can be optimised further by adding an amount of liquid to a sort of feed by means of the liquid-supplying device 40. What should be the amount of liquid to be added per cow per sort of feed is determined per cow with the aid of data in the memory 41 of the computer 42. Said data contain per cow a relation between the intake of the sort of feed and the added amount of liquid for obtaining for example a desired milk production. Thus, after a cow 24 has been identified, the computer 42 issues a signal to the liquid-supplying device 40 for supplying the relevant amount of liquid. For that purpose the computer 42 uses the relevant data from the memory 41.

For the first use of the device according to the invention these data can be inputted into the memory 41 by making use of inputting means, such as a keyboard 43. This can be done by a farmer who inputs values per cow and per sort of feed according to his experience. For facilitating the input and for checking the functioning of the device during the use thereof, the computer 42 comprises a display screen 44.

The device may comprise measuring means 45 known per se for measuring the atmospheric conditions, such as temperature, air humidity, atmospheric pressure, wind speed and the like. The data in the memory 41 can contain per cow a relation between the amount of liquid to be added per sort of feed in dependence on the environmental conditions, which relation leads to a desired feed intake.

Thus, in the embodiment described, after a visit of a cow to the milking box, the following data are stored in the memory: the amount consumed per sort of feed, the amount of liquid added per sort of feed, the temperature, the air humidity, the atmospheric pressure, the wind speed, and the milk yield. When a cow has consumed all the feed supplied, said data are processed by the computer into the memory, so that at a next visit of the cow under the same circumstances the same amounts of liquid can be added to the sorts of feed.

When the cow has not consumed all the feed, at the next visit of the cow to the milking box it is possible to change the amount of liquid which is added to the sorts of feed or the ratio and amount in which the sorts of feed are offered themselves. For changing the amount of liquid to be added different approaches can be made. For example, the amount of liquid to be added can be increased at the next visit by 5% (another increase, or even decrease, is also possible, of course), after which the amount of feed consumed is measured. Accordingly, the amount of liquid is changed automatically per visit of the cow to the milking box until the cow has eaten up the entire amount of the sort of feed supplied. In the latter case the data are recorded by the computer in the memory as standard values. Otherwise, they are stored temporarily, for providing the possibility of determining the standard values. The control device comprising the computer can be programmed such that certain data are given priority for determining the amount of liquid to be added. An example of a priority order is: amount consumed of the sort of feed, milk yield, air humidity, temperature, atmospheric pressure, wind speed. Of course, another order, in dependence on the wishes of the farmer, is possible as well. Thus there is provided an iterative way of determining the amount of liquid to be added for obtaining the optimal feed intake.

The liquid-supplying device 40 may be provided with a heating device or cooling device 46 for the liquid, bringing the liquid at a temperature suitable for optimal feed intake and possibly making the viscous liquid better processable. The operation of the heating/cooling device 46 can also be controlled by the computer 42 with the aid of data from the identification means and the data from the memory 41.

The device is provided with an additive device 47 for adding additives to the feed. Said additive device can be controlled by the computer 42 which controls for example a valve 48 in dependence on data from the identification means and data from the memory 41. As a result thereof for each cow individually certain additives, such as medicines, vitamins, fish oil, salts, minerals, and the like, can automatically be added to the feed.

By means of the measuring device 34 it is further determined how much feed a relevant cow has consumed during the feeding time. The amount of the sort of feed and the amount of liquid added can also be determined separately. These data can be used for continuously updating the data in the memory and possibly adapting them to a changing eating behaviour of the cow.

As mentioned in the foregoing, some alternatives for determining the weight of a feed trough, in particular the amount of feed present therein, will now be described.

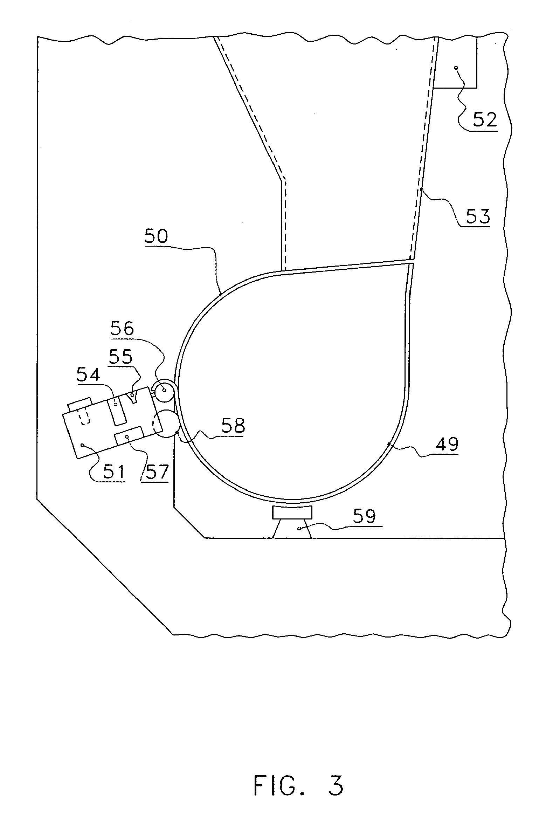

Figure 3 shows schematically a first embodiment of a feed trough 49 for containing feed. An entrance opening 50 gives an animal, for example but not exclusively a cow, access to the feed trough 49. An identification means known per se, i.e. an animal identification device 51, is disposed near the feed trough 49 and recognises a particular animal approaching the feed trough 49 and wishing to make use of it. With the aid of data from the animal identification device 51, a control device 52 supplies an amount of a particular sort of feed to the feed trough 49, the amount of said sort of feed falling into the feed trough 49 via for example a tube-shaped chute 53.

By weighing the amount of the sort of feed present in the feed trough, it can be determined how much of a particular sort of feed is consumed by a particular animal, and also whether remaining feed is present in the feed trough. The means for weighing the feed present in the feed trough are preferably connected with the control device for supplying, with the aid of data both from the animal identification device and the means for weighing, an amount of a sort of feed to the feed trough, while the amount of a sort of feed left by the previous animal can thus be taken into account.

In Figure 3 the means for weighing the feed present in the feed trough 49 comprise a feed trough 49 which is pivotable about a pivot axis 56. The degree of pivoting is determined by the weight of the feed present in the feed trough 49. There is provided a device 57 for determining the degree of pivoting of the feed trough 49 and for deducing therefrom the weight of the feed present in the feed trough 49. The device 57 for determining the degree of pivoting of the feed trough 49 comprises a measuring roll 58 being in contact with the feed trough. From the degree of rotation of the measuring roll 58 the degree of pivoting and thus the amount of feed in the feed trough 49 can be determined.

Because of the fact that the device 57, 58 for determining the degree of pivoting of the feed trough 49 is integrated in the animal identification device 51, there is obtained a compact construction.

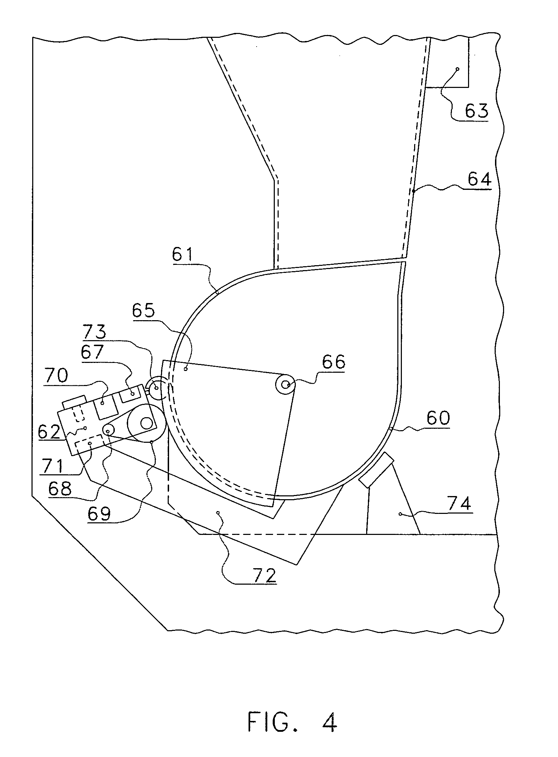

Alternatively or additionally, as shown in Figure 4, the pivoting-determination device 70 for determining the degree of pivoting of the feed trough 60 and for deducing therefrom the weight of the feed present in the feed trough 60, may comprise a dynamometer 71. In the embodiment shown, the feed trough 60 bears on the dynamometer 71 via a supporting arm 72. In this situation the feed trough 60 pivots about a pivot axis 73. The dynamometer 71 is preferably included in the animal identification device 62.

In the embodiments shown in Figures 3 and 4, even small differences in weight can be measured, because of the fact that the pivot axis 56, 73 and the measuring roll 58 respectively the dynamometer 71 are located at a small distance from each other.

For preventing in undesired cases of malfunction, for example when the animal pushes the feed trough downwards with force, the measuring roll, the dynamometer or the like from being damaged, in both embodiments there may be provided a safety support cam 59 (Figure 3) respectively 74 (Figure 4) for supporting the feed trough 49; 60.

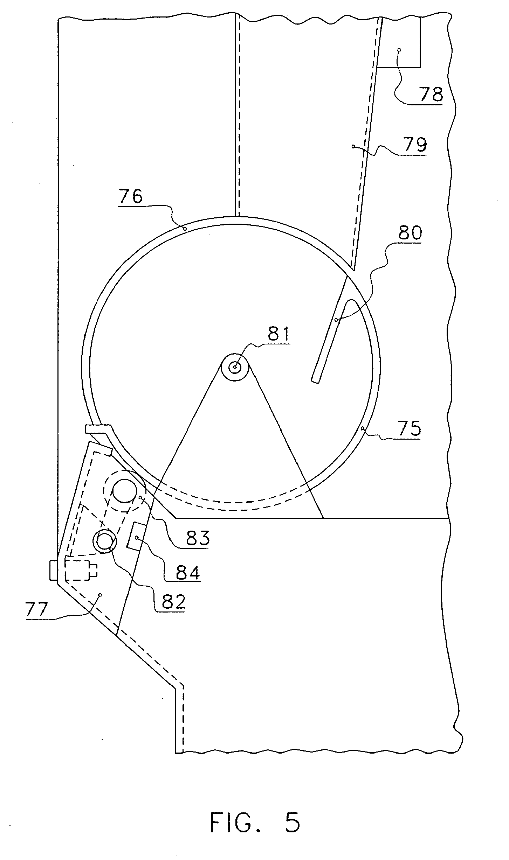

In the third embodiment, as shown schematically in Figure 5, the means for weighing the feed present in the feed unit comprise a movable feed trough 75. The feed trough 75 is moved in a reciprocating manner by the motor 82 by which the roll 83 is driven. As a result of this movement there is created a torque whose magnitude is determined by a device 84 for measuring the magnitude of the torque. From the torque determined the device 84 deduces the weight of the amount of a sort of feed present in the feed trough. The exact correlation between torque and amount of feed can previously be determined by simple calibration tests.

The embodiment according to Figure 5 has a compact construction because of the fact that the motor 82 for moving the feed trough 75, and the device 84 for measuring the magnitude of the torque during moving and for deducing the weight of the amount of the sort of feed present in the feed trough 75 from the measured magnitude of the torque, are integrated in the animal identification device 77.

The feed trough may be provided with means for holding back an animal wishing to make use of the feed trough at an undesired point of time, or preventing that animal from making further use of the feed trough (for example for the remaining sorts of feed) or making further use of the feed trough impossible for that animal, with the aid of data from the animal identification device. As a result thereof it is possible to deter, in a simple, efficient and cheap manner, animals which are not eligible to be fed from putting their heads into the feed trough, and to teach an animal first to eat the sort of feed present in the feed trough before another sort of feed is offered.

In the first embodiment shown in Figure 3, the means for holding back an animal comprise a loudspeaker 55 for issuing an animal-deterring sound. Alternatively or additionally, the means for holding back an animal may comprise a lighting device 54 for producing an animal-deterring light. In particular when several feed troughs are juxtaposed, the use of deterring light is desirable, because this light can be focussed such that it only produces an effect on one particular feed trough.

In the second embodiment according to Figure 4, the means for holding back an animal comprise a closing means 65 which is movable across the entrance opening 61. When the closing means 65 is moved across the entrance opening 61, the contents of the feed trough 60 can be made inaccessible to a particular animal. In the embodiment shown, the closing means 65 is a vessel-shaped element capable of rotating about an axis 66. Said axis 66 may be a motor-driven axis, said motor being controlled with the aid of data from the animal identification device 62.

Additionally there may be provided a voltage supplying device 67 for supplying an animal-deterring electric tension to the closing means 65. Animals approaching the feed trough 60 undesirably often make contact with the feed trough 60. They will in particular touch the closing means 65 with their noses. By connecting precisely those components of the feed trough that are regularly touched by animals with the voltage supplying device 67, it is possible to deter a particular animal very locally. Accordingly, such a voltage supplying device 67 can also be used per se independently of a closing means.

The second embodiment also comprises a control device 63 and a tube-shaped chute 64 for the feed.

The devices described can be designed extremely compactly when the means for holding back an animal are integrated in the animal identification device. Alternatively the means for holding back an animal may be separate means.

In the third embodiment according to Figure 5, the closing means is constituted by the feed trough 75 itself which is designed movably. In the shown situation the feed trough 75 is rotatably disposed about an axis 81, which axis 81 may be a motor-driven axis, said motor being controlled by the animal identification device.

In order to prevent that, in the position in which the feed trough 75 closes the entrance opening 76, feed falls from the feed trough 75, the feed trough 75 is provided with a wall portion 80 for catching remaining feed. Said wall portion 80 can also act as a feed-guiding means for feed supplied through the tube-shaped chute 79 to the feed trough 75.

As described, in the second and third embodiment there is provided a simple but reliable construction due to the fact that the closing means rotates about an axis, the closing means being driven by a motor controlled by the animal identification device. For the purpose of providing, besides a simple but reliable construction also a compact construction, a roll 69 respectively 83 is preferably driven by a motor 68 respectively 82, said roll 69, 83 being in contact with the closing means 65 respectively 75. In the third embodiment the feed trough 75 thus bears on the animal identification device 77 via the roll 83.

Although for the roll 83 a separate torque roll may be used, it is preferred when the roll 83 performs both the function of driving the closing means, in this case the feed trough 75 itself, and the function of torque roll respectively measuring roll. Of course, in the alternative case in which the feed trough 75 is moved by the axis 81 driven by a motor, the torque can also be measured via that motor.

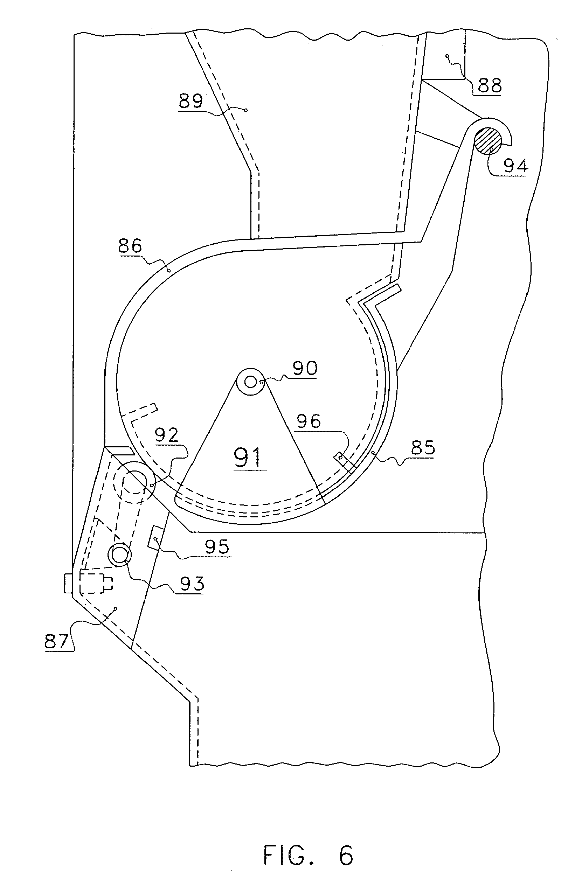

The fourth embodiment, as shown in Figure 6, comprises both means for holding back an animal wishing to make use of the feed trough 85 with the aid of data from the animal identification device 87, and means for weighing the feed present in the feed trough 85.

The means for holding back are constituted by a separate closing means 91 which is rotatable about an axis 90. The closing means 91 is set in rotation by a roll 92, capable of coming into contact with the closing means 91, and is driven by a motor 93 which is controlled by the animal identification device 87.

In this embodiment the weighing means are constituted by a feed trough 85 which is rotatable about an axis 94. The feed unit 85 can be brought into contact with the roll 92, and is subject to a reciprocating movement by correct operation of the motor 93 by which the roll 92 is driven. By the movement of the feed trough 85 there is generated a torque which can be measured by the torque measuring device 95.

In the situation shown in Figure 6 the roll 92 makes contact with the feed trough 85 and the latter can be set in motion for determining the amount of sort of feed present in the feed trough 85. After an animal has consumed the sort of feed, the amount of remaining sort of feed can be determined by torque measurement. Then the roll 92 is controlled by the motor 93 in such a way that it partially covers the entrance opening 86. A catching device 96 on the feed trough 85 takes along the closing means 91 until the latter comes into contact with the roll 92. Then the roll 92 controls the closing means 91 in such a way that it covers the entire entrance opening 86. As a result of the fact that the feed trough 85 is no longer in contact with the roll 92, the feed trough 85 falls back to the starting position in which a next sort of feed can possibly be supplied via the tube-shaped chute or channel-shaped chute 89.

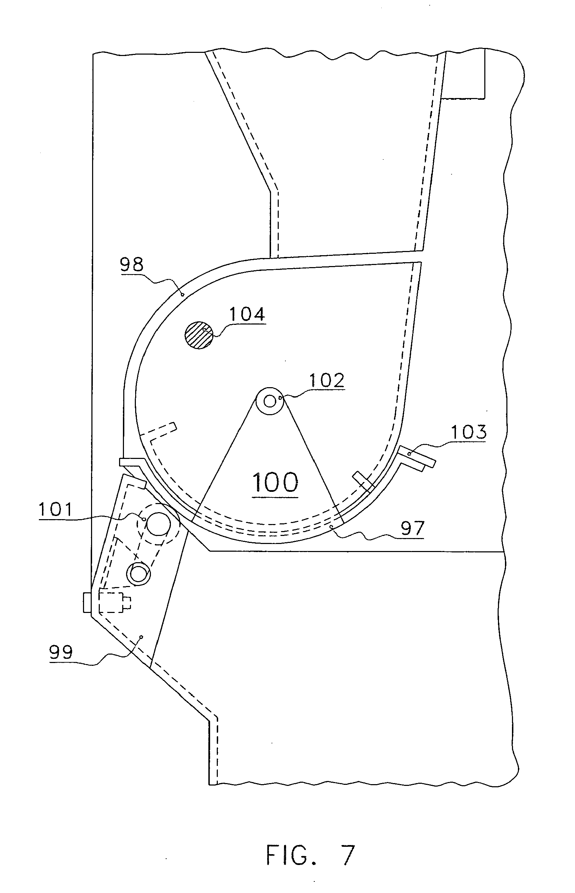

The fifth embodiment according to Figure 7 differs from that of Figure 6 by the location of the pivot axis 104 about which the feed trough 97 rotates. The pivot axis 104 is disposed close to the roll 101 for driving the feed trough 97 and measuring the torque, for measuring very small differences in amount of feed. There is also provided a stop 103 for preventing superfluous movement of the feed trough 97. The closing means 100 for closing the entrance opening 98 pivots about the axis 102.

The invention will be elucidated hereinafter with reference to a feed ration to be offered to a cow, which ration may be composed of the following four sorts of feed: concentrate, ensilaged grass, maize and brewer's grains. However, it will be obvious that other sorts of feed can be added and/or certain sorts of feed can be replaced by other sorts of feed. The adding of a certain amount of liquid has already been described above and will not be set out again.

Until now the four sorts of feed have been supplied to the feed trough collectively or as a mixture, irrespective of the prevailing circumstances. According to the invention there is provided variation in the offered feed in that the control device 19, 42, 52, 63, 78, 88 controls the device in such a way that amount of a sort of feed to be supplied to the relevant feed trough 6, 31, 49, 60, 75, 85, 97 depends on the measured values of relevant variable parameters. For example, in dependence on the measured value, more concentrate and ensilaged grass, but less maize and brewer's grains may be supplied. On the other hand, in the case of changing circumstances, more ensilaged grass and less maize, concentrate and brewer's grains may be supplied. It will be obvious that the amount per sort of feed is controlled by the control device.

The ratio and amounts are also determined in dependence on the preferences, the environmental conditions respectively in dependence on the desired economic results.

It has been found for example that one cow prefers brewer's grains to other sorts of feed, whereas another cow prefers concentrate and finds brewer's grains not tasty at all. The invention may be advantageous to prevent that the latter cow, just because brewer's grains is present in the offered feed, consumes less than desirable. For example, in that situation, when brewer's grains does not contain a nutritive ingredient that the other sorts of feed do contain, brewer's grains is not offered to that cow. When that cow needs an ingredient that is only present in brewer's grains, the control device is capable of controlling the relevant components in such a way that the composition of the mixture is such that the cow still consumes the brewer's grains. Such a control by the control device can take place due to the fact that such data are stored in the memory of the computer.

It has further been found that in humid circumstances cows prefer drier feed mixtures, so that in that case more dry ensilaged grass, and less of the wetter concentrate has to be supplied.

The atmospheric-condition-measuring means described above can then ensure an automatic adaptation of the ratio and/or amount, in dependence on the measured temperature, humidity, atmospheric pressure, wind speed and the like.

Like with human beings, the optimal feed intake of a cow may depend on the point of time of the day, and thus it is possible to distinguish for example breakfast, lunch and dinner. Also these data may be included in the memory. When a clock, which is not explicitly shown in the drawings but is implicitly present in the computer, indicates the point of time of the day and issues a corresponding time signal to the control device, the point of time of the day can automatically be taken into account. It has further been found that there is per cow a season-dependence in the ratio and amount of sorts of feed offered ensuring an optimal intake, which can automatically be taken into account by means of the clock.

As mentioned in the foregoing, the eating rate (from which the preference, respectively taste of the animal can be deduced), the milk yield, and the amount of energy and/or protein and/or fat and/or minerals and/or amino acids, and the like present in the milk produced by a cow appear to be suitable for being used as data in the memory for controlling the ratio and amount of the sorts of feed to be supplied. Measuring devices for measuring the value of the mentioned parameters are known per se.

Such data, analogously to what has been described above in relation to adding liquid, can be inputted into the computer by means of the keyboard or another comparable inputting device for inputting data into the memory. Such data can also automatically be generated by the control device itself, by providing variation in the sorts of feed to be offered and by determining the feed intake resulting therefrom, respectively the economic result resulting therefrom, and by automatically varying the offered feed in dependence on the result. This feed back can also take a developing animal into account.

Because a number of data can be used by the control device for generating the control signal, there can also be provided a priority algorithm, as a result of which, on determining the order of sorts of feed to be offered, one data (for example milk yield) is given priority over another data (such as eating rate) when generating the control signal. Moreover, weight factors can be allotted to the various data, so that it is possible to take several data into account simultaneously. Such programs and algorithms are known per se to the person skilled in the art.

Because the number of possible combinations between data per cow is extremely large, for the sake of simplicity of the description it is impossible to describe the possible combinations. With the aid of the above-mentioned information, it is possible for a person skilled in the art to obtain, depending on his/her wishes, the desired amounts and ratios of sorts of feed to be offered by means of simple trial and error tests.

## Claims

1. A device for automatically supplying feed to animals, such as cows, the device being provided with a control device (19), the control device (19) generating a control signal for controlling the supply of the feed, and with parameter-measuring means for measuring a momentary value of a variable parameter and for issuing a parameter value signal to the control device (19), the control device (19) being provided with a processing device for processing the parameter value signal into the control signal, **characterized in that** the parameter measuring means comprise means for determining the eating rate per animal and for issuing an eating rate signal to the processing device.

2. A device for automatically supplying feed to dairy animals, such as cows, the device being provided with a control device (19), the control device (19) generating a control signal for controlling the supply of the feed, and with parameter-measuring means for measuring a momentary value of a variable parameter and for issuing a parameter value signal to the control device (19), the control device (19) being provided with a processing device for processing the parameter value signal into the control signal, **characterized in that** the parameter measuring means comprise means for measuring the milk yield of the animal and for issuing a milk yield signal to the processing device.

3. A device for automatically supplying feed to animals, such as cows, the device being provided with a control device (19), the control device (19) generating a control signal for controlling the supply of the feed, and with parameter-measuring means for measuring a momentary value of a variable parameter and for issuing a parameter value signal to the control device (19), the control device (19) being provided with a processing device for processing the parameter value signal into the control signal, **characterized in that** the parameter measuring means comprise means for measuring the amount of an ingredient in the milk produced by a dairy animal, such as protein and/or fat and/or minerals and/or amino acids, and for issuing a relevant signal to the processing device.

4. A device as claimed in any one of the preceding claims, **characterized in that** the device is provided with means for measuring the amount of a sort of feed consumed by an animal and for issuing a consumed-amount signal to the processing device.

5. A device for automatically supplying feed to animals, such as cows, the device being provided with a control device (19), the control device (19) generating a control signal for controlling the supply of the feed, and with parameter-measuring means for measuring a momentary value of a variable parameter and for issuing a parameter value signal to the control device (19), the control device (19) being provided with a processing device for processing the parameter value signal into the control signal, **characterized in that** the parameter measuring means comprise means for measuring the amount of a sort of feed consumed by an animal and for issuing a consumed-amount signal to the processing device.

6. A device as claimed in any one of the preceding claims, **characterized in that** the control device (19) is provided with a computer (42) having a memory (41), said computer being provided with an inputting device (43) for inputting data into the memory (41).

7. A device as claimed in claim 6, **characterized in that** the control device (19) is provided with a computer (42) which is suitable for generating itself data for the memory (41).

8. A device as claimed in claim 6 or 7, **characterized in that** the data are updated continuously.

9. A device as claimed in any one of the preceding claims, **characterized in that** the device is provided with an additive device (47) for adding additives to the feed.

10. A device as claimed in any one of the preceding claims, **characterized in that** the device is provided with a detection device for determining, at a point of time after a supply of an amount of feed, the amount of feed, and for issuing, in dependence on the amount-determination result, a signal to the processing device.

11. A device as claimed in any one of the preceding claims, **characterized in that** the device is provided with a number of hoppers (9, 10), each for containing a stock of a particular sort of feed, with a feed trough (6, 31) which is accessible to an animal, and with conveying means (3, 11) for conveying feed from the hoppers (9, 10) to the feed trough (6, 31).

12. A device as claimed in claim 11, **characterized in that** the control device (19) is suitable for controlling the device in such a way that sorts of feed are supplied to the feed trough (6, 31) in a particular amount and in a particular ratio collectively respectively as a mixture.

13. A device as claimed in claims 10 and 11 or claims 10 and 12, **characterized in that** the detection device comprises a weighing device (34) for weighing the amount of feed in the feed trough (31).

14. A device as claimed in claim 11, 12 or 13, **characterized in that** the feed trough is a feed trough which is designed to be closed by a closing means, the control device also being suitable for controlling the operation of the closing means.

15. A device as claimed in any one of claims 11 through 14, **characterized in that** the device is provided with feed-determining means (5) for determining the sort of feed in a hopper (9, 10).

16. A device as claimed in any one of the preceding claims 11 through 15, **characterized in that** the device is provided with a receptacle (12), the conveying means comprising a first conveyor (11) for conveying an amount of feed from the hopper (9, 10) to the receptacle (12) and a second conveyor (3) for conveying the amount of feed from the receptacle (12) to the feed trough (6).

17. A device as claimed in claim 16, **characterized in that** the receptacle (12) is provided with a weighing device (20) for measuring feed present in the receptacle (12).

18. A device as claimed in claim 16 or 17, **characterized in that** the receptacle (12) has a bottom which is designed to be opened.

19. A device as claimed in claim 18, **characterized in that** there is provided a control device (19) for controlling the opening of the bottom of the receptacle (12).

20. A device as claimed in any one of claims 16 through 19, **characterized in that** the second conveyor (3) is a tube-shaped chute respectively a channel-shaped chute.

21. A device as claimed in any one of the preceding claims, **characterized in that** the device is integrated in a milking box (22).

22. A device as claimed in any one of claims 1 through 20, **characterized in that** the device is a feeding column.

23. A method of automatically supplying feed to animals, such as cow, said method comprising the step of measuring a momentary value of a variable parameter and of providing a parameter value signal, the supply of feed depending on the parameter value signal, **characterized in that** as variable parameter the eating rate of an animal is chosen.

24. A method of automatically supplying feed to animals, such as cows, said method comprising the step of measuring a momentary value of a variable parameter and of providing a parameter value signal, the supply of feed depending on the parameter value signal, **characterized in that** as variable parameter the milk yield of the animal is chosen.

25. A method of automatically supplying feed to animals, such as cows, said method comprising the step of measuring a momentary value of a variable parameter and of providing a parameter value signal, the supply of feed depending on the parameter value signal, **characterized in that** as variable parameter the amount of an ingredient in the milk produced by a dairy animal, such as protein and/or fat and/or minerals and/or amino acids, is chosen.

26. A method of automatically supplying feed to animals, such as cows, said method comprising the step of measuring a momentary value of a variable parameter and of providing a parameter value signal, the supply of feed depending on the parameter value signal, **characterized in that** as variable parameter the amount of a sort of feed consumed by an animal is chosen.
